(19) **Europäisches Patentamt / European Patent Office / Office européen des brevets**

(11) **EP 4 074 791 B1**

(12) # EUROPEAN PATENT SPECIFICATION

(45) Date of publication and mention
of the grant of the patent:
**01.01.2025 Bulletin 2025/01**

(21) Application number: **20898733.9**

(22) Date of filing: **15.10.2020**

(51) International Patent Classification (IPC):
**C09D 201/00** (2006.01) **C09D 7/61** (2018.01)
**C09D 167/00** (2006.01) **C08K 9/04** (2006.01)
**C08K 3/04** (2006.01)

(52) Cooperative Patent Classification (CPC):
(C-Sets available)
**C08K 9/08; C09D 7/61; C09D 7/70; C09D 167/00;**
C08K 3/04; C08K 3/041; C08K 7/04;
C08K 2201/016 (Cont.)

(86) International application number:
**PCT/KR2020/014103**

(87) International publication number:
**WO 2021/118036 (17.06.2021 Gazette 2021/24)**

(54) **SURFACE TREATMENT COMPOSITION FOR VIBRATION DAMPING STEEL SHEET AND VIBRATION DAMPING STEEL SHEET**

OBERFLÄCHENBEHANDLUNGSZUSAMMENSETZUNG FÜR SCHWINGUNGSDÄMPFENDES STAHLBLECH UND SCHWINGUNGSDÄMPFENDES STAHLBLECH

COMPOSITION DE TRAITEMENT DE SURFACE POUR TÔLE D'ACIER AMORTISSANT LES VIBRATIONS ET TÔLE D'ACIER AMORTISSANT LES VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2019 KR 20190164858**

(43) Date of publication of application:
**19.10.2022 Bulletin 2022/42**

(73) Proprietor: **POSCO**
**Pohang-si, Gyeongsangbuk-do 37859 (KR)**

(72) Inventors:
• **KIM, Jin-Tae**
**Gwangyang-si, Jeollanam-do 57807 (KR)**
• **LEE, Jung-Hwan**
**Pohang-si, Gyeongsangbuk-do 37877 (KR)**
• **KIM, Yeong-Seon**
**Gwangyang-si, Jeollanam-do 57807 (KR)**
• **CHOI, Ha-Na**
**Gwangyang-si, Jeollanam-do 57807 (KR)**
• **CHOI, Yang-Ho**
**Gwangyang-si, Jeollanam-do 57807 (KR)**

(74) Representative: **Meissner Bolte Partnerschaft mbB**
**Patentanwälte Rechtsanwälte**
**Postfach 86 06 24**
**81633 München (DE)**

(56) References cited:
WO-A2-2014/153570   CN-A- 103 031 030
JP-A- 2008 291 077   JP-A- 2009 213 976
JP-A- 2011 084 690   JP-A- 2013 253 140
JP-A- 2019 504 189   KR-A- 20100 050 252

**(Cont. next page)**

(52) Cooperative Patent Classification (CPC): (Cont.)

C-Sets
**C09D 167/00, C08K 9/04**

**Description**

[Technical Field]

The present invention relates to a surface treatment composition for a vibration damping steel sheet and a vibration damping steel sheet.

[Background Art]

A vibration damping steel sheet is a steel sheet which blocks external noise or vibrations, and is used in various fields, for example, outer plates of household appliances making a lot of noise such as a refrigerator, a washing machine, or an air purifier, automotive parts such as an engine oil pan or a dash panel which are the main cause of car noise, precision instruments, building materials, and the like.

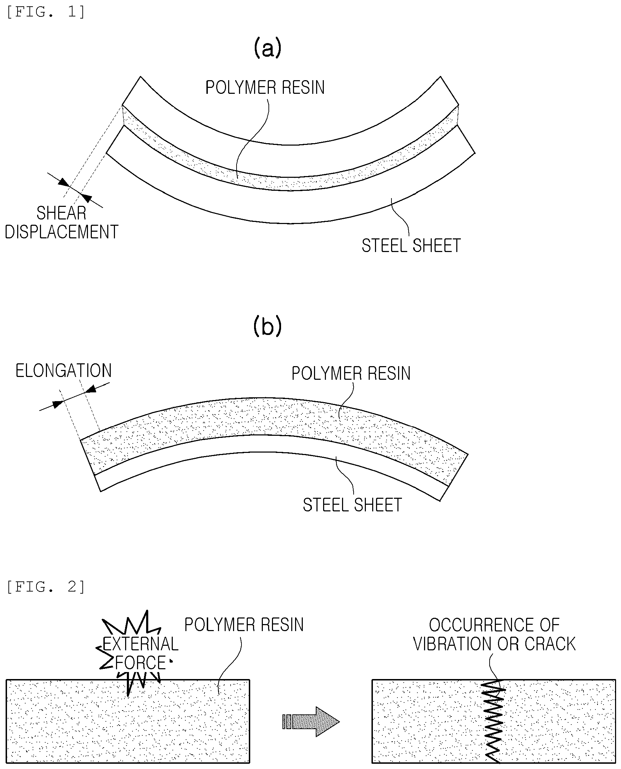

The vibration damping steel sheet generally includes a constrained vibration damping steel sheet manufactured by laminating a polymer resin between two steel sheets and a non-constrained vibration damping steel sheet in which a polymer resin is applied or laminated on one steel sheet, and the constrained vibration damping steel sheet and the non-constrained vibration damping steel sheet are different in a method of implementing vibration damping performance. External noise or vibrational energy is converted into thermal energy by shear deformation of the polymer resin laminated between steel sheets in the constrained vibration damping steel sheet ((a) of FIG. 1), or by stretch deformation of the polymer resin applied on a steel sheet in the non-constrained vibration damping steel sheet ((b) of FIG. 1).

As the conventional technology related to the vibration damping steel sheet, technologies using a polyester resin (Japanese Patent Laid-Open Publication No. (Sho) 51-93770), using a polyamide resin (Japanese Patent Laid-Open Publication No. (Sho) 56-159160), and using ethylene/$\alpha$-olefin and crosslinked polyolefin (Japanese Patent Laid-Open Publication No. (Sho) 59-152847), are known in the art. The conventional technologies implemented vibration damping performance using a viscoelastic effect of a polymer resin. Under the background as such, the inventors of the present invention intended to improve vibration damping performance, thereby deriving the present invention.

JP 2009 213976 A relates to a coating apparatus that forms a coating film, and more particularly, to a coating apparatus that discharges a coating liquid from a slot die to a continuously running belt-like support and creates a coating film on the belt-like support.

CN 103 031 030 A relates to a kind of multi-functional deck of ship noise reducing damping coating and preparation method thereof.

WO 2014/153570 A2 to a matrix strategy of an all-encompassing or selective integrating of the petrochemical, metals, pharmaceutical, energy and power industry's processes and technologies for optimum energy and operational efficiency, new profitable product diversification and compliant cycled closed looped emissions free processing.

JP 2019 504189 A relates to a surface treatment composition for a plated steel sheet, a steel sheet surface-treated using the same, and a surface treatment method using the same.

KR 2010 0050252 A relates to a conventional resin composition for surface treatment of steel sheet which provides conductivity through conductive particles such as metal powder and metal salt.

[Disclosure]

[Technical Problem]

The purpose of the present invention is to provide a steel sheet surface treatment composition which improve vibration damping performance of a steel sheet.

[Technical Solution]

The present invention provides a surface treatment composition for a vibration damping steel sheet according to claim 1 and a vibrational damping steel sheet according to claim 3.

[Advantageous Effects]

As set forth above, according to an exemplary embodiment in the present invention, inorganic nanoparticles having a mean aspect ratio (L/D) of 100 or more are applied in the manufacturing of a vibration damping steel sheet, thereby providing a vibration damping steel sheet which may convert external vibrational energy into thermal energy by a polymer resin interfacial slip to block external vibrations or noise.

[Description of Drawings]

FIG. 1 is drawings illustrating a principle of blocking external vibrational energy of a conventional vibration damping steel sheet. In FIG. 1, (a) is a constrained vibration damping steel sheet and (b) is a non-constrained vibration damping steel sheet.

FIG. 2 is a drawing illustrating that when external force is applied to a conventional vibration damping steel sheet, vibrations or cracking occur in the steel sheet.

FIG. 3 is a drawing illustrating that when external force is applied to a vibration damping steel sheet of the present invention, inorganic nanoparticles cause a slip in a polymer resin interface.

FIG. 4 is a drawing illustrating that when external force is applied to a constrained vibration damping steel sheet and a non-constrained vibration damping steel sheet according to the present invention, inorganic nanoparticles cause a slip in a polymer resin interface.

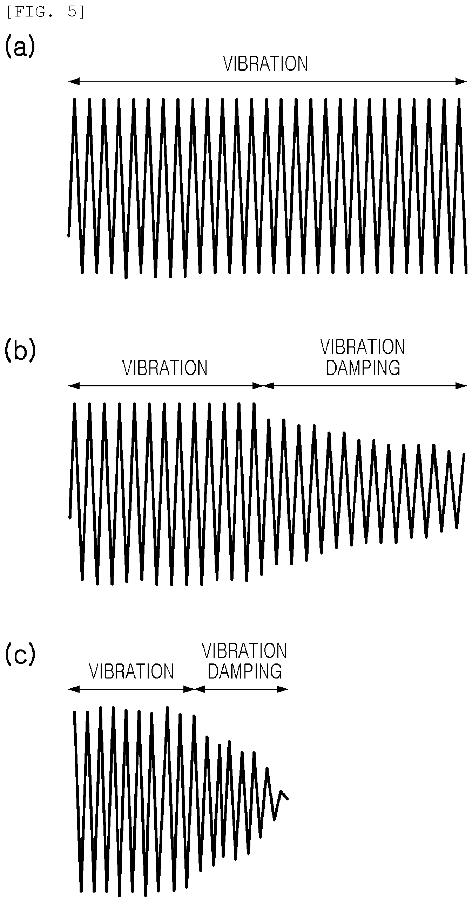

FIG. 5 is drawings illustrating vibration damping performance of (a) a steel sheet, (b) the conventional vibration damping steel sheet, and (c) the vibration damping steel sheet according to the present invention.

[Best Mode for Invention]

Hereinafter, exemplary embodiments in the present invention will now be described in detail. However, the exemplary embodiments in the present invention may be modified in many different forms and the scope of the invention should not be limited to the embodiments set forth herein.

The present invention relates to a composition for surface treatment of a vibration damping steel sheet including a polymer resin and inorganic nanoparticles. According to the present invention, an interfacial slip effect of the inorganic nanoparticles having a high aspect ratio (L/D) as well as a viscoelastic effect of the polymer resin may be used to implement the vibration damping performance of the steel sheet.

The vibration damping steel sheet includes a constrained vibration damping steel sheet manufactured by laminating a polymer resin molded in a film form between two steel sheets and a non-constrained vibration damping steel sheet in which a polymer resin is applied or laminated on one steel sheet. The polymer resin applied to the vibration damping steel sheet has a viscoelastic effect, and converts vibrational energy into thermal energy by shear deformation or stretch deformation. As the polymer resin, one or more resins selected from the group consisting of an ethylene vinyl acetate resin, a polyethylene resin, a polypropylene resin, a polyvinyl butyral resin, a polyester resin, a polyvinyl chloride resin, and an epoxy resin is used.

Meanwhile, in the case in which particles of the polymer are used alone in the manufacturing of the vibration damping steel sheet, when external force such as vibration and noise is applied to the steel sheet, vibration occurs in a vibration damping layer due to the brittle properties of the polymer resin and further, a crack may occur (FIG. 2).

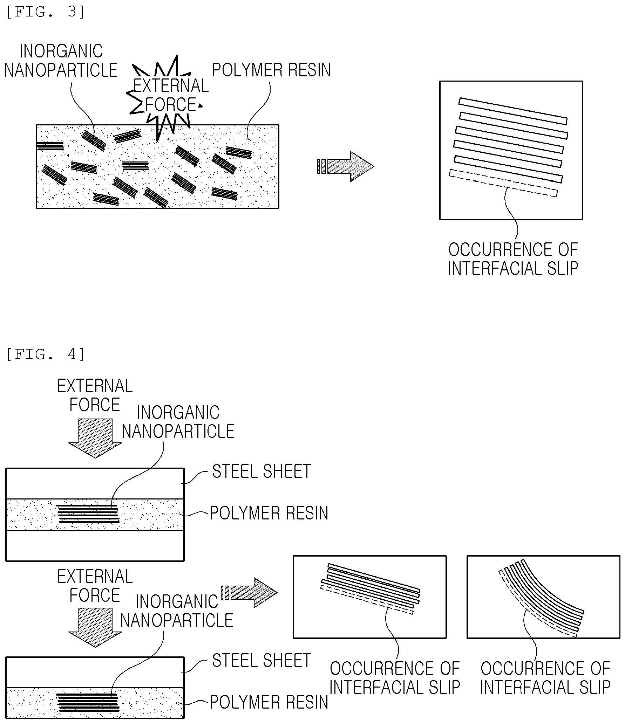

However, as shown in FIG. 3, in the case in which a composition in which a polymer resin and inorganic nanoparticles having a high mean aspect ratio (L/D) are mixed is used to manufacture a vibration damping steel sheet, a crack does not easily occur even when external force is applied to the steel sheet. This is because the polymer resin and the inorganic nanoparticles are mixed to cause a hardening effect, thereby improving mechanical properties of the polymer resin such as strength and hardness. That is, the inorganic nanoparticles having a high mean aspect ratio (L/D) according to the following Equation (1) may improve the strength of a soft area of the polymer resin and make a brittle area harder, thereby complementing the mechanical properties of the polymer resin:

$$[18] \quad \sigma_c = \sigma_f + V_f\theta + \alpha[1-(1/D)/\{2(L/D)\}] + \sigma_m(1-V_f) \quad \text{Equation}$$

$$(1)$$

$\sigma_c$: mechanical properties of composite
$\sigma_f$: mechanical properties of inorganic nanoparticles
$\sigma_m$: mechanical properties of polymer resin
$V_f$: volume fraction of inorganic nanoparticles
$\theta$: orientation coefficient of inorganic nanoparticles
$\alpha$: strength factor constant of inorganic nanoparticles
L/D: mean aspect ratio

Furthermore, the inorganic nanoparticles having a high aspect ratio (L/D) increases a contact area with the polymer resin, thereby also increasing a slip force with a polymer resin interface. That is, as shown in FIG. 4, external vibrational energy is converted into thermal energy by a slip occurring on the polymer resin interface, thereby implementing improved vibration damping performance.

In order to implement the vibration damping performance as described above, inorganic nanoparticles having a mean aspect ratio (L/D) of 100 or more are used, and the kind of inorganic nanoparticles is one or more selected from the group consisting of graphite nanofiber and carbon nanotubes. Preferably, the kind of inorganic nanoparticles is one or more selected from the group consisting of nano clay and graphene.

In the surface treatment composition of the present invention, the inorganic nanoparticles may be included at 0.1 to 20 parts by weight with respect to 100 parts by weight of the polymer resin. When the content of the inorganic nanoparticles is less than 0.1 parts by weight, it is difficult to express vibration damping performance which is to be implemented in the present invention, and when the content is more than 20 parts by weight, the viscosity of the composition is increased, so that it is difficult to form the vibration damping layer.

In addition, the composition may further include an additive which is generally used for steel sheet surface treatment, and for example, may further include a wetting agent, a defoaming agent, a crosslinking agent, an antioxidant, and the like.

Next, a vibration damping steel sheet having a vibration damping layer formed using the composition for surface treatment of a vibration damping steel sheet will be described. The vibration damping layer may be formed by molding the composition into a film form and laminating the film, or applying a liquid composition, on at least one surface of a steel sheet. In addition, the vibration damping layer may be formed by molding the composition into a film form and laminating the film, or applying a liquid composition, between steel sheets.

In the case of the vibration damping layer molded into a film form, the polymer resin is melted by heating to its melting point or higher, the inorganic nanoparticles are uniformly mixed therewith (melt brand method), and the mixture is molded into a film form. Mixing conditions may be appropriately adjusted depending on the melting point of the polymer resin, and the thickness of the film is preferably 25 to 200 um. When a vibration damping layer molded into a film form is manufactured, an ethylene vinyl acetate resin, a polyethylene resin, a polypropylene resin, a polyvinyl butyral resin, and the like may be used as a preferred polymer resin.

Meanwhile, when the polymer resin is a liquid, an appropriate amount of inorganic nanoparticles are uniformly mixed, and then the mixture is applied to a thickness of 1 to 200 um, thereby forming the vibration damping layer. In this case, a polyester resin, a polyvinyl chloride resin, an epoxy resin, and the like may be preferably used.

The steel sheet is not particularly limited in the present invention, but a cold rolled steel sheet, a hot rolled steel sheet, a galvanized steel sheet, a zinc alloy plated steel sheet, a stainless steel sheet, an aluminum plate, and the like may be used, and generally the thickness of the metal plate may be about 0.2 to 1.2 mm.

When the polymer resin and the inorganic nanoparticles having a mean aspect ratio (L/D) of 100 or more are applied to the vibration damping steel sheet as in the present invention, vibrational energy is converted into thermal energy by the viscoelasticity of the polymer resin and the slip of the inorganic nanoparticles, thereby securing the vibration damping performance (FIG. 4).

[Mode for Invention]

Example

Hereinafter, the Examples of the present invention will be described in detail. The following Examples are only illustrative of the present invention, and do not limit the scope of the present invention.

1. Manufacturing of coating solution and film for forming vibration damping layer

(1) Example 1

10 g of nanoclay having a mean aspect ratio (L/D) of 100 (Aldrich) and surface-modified with trimethyl stearyl ammonium was added to 100 g of a polyester resin, and then the mixture was uniformly dispersed at a speed of 3000 rpm in a high-speed agitator, thereby preparing a coating solution. The thus-prepared coating solution was used to form a film having a thickness of 100 $\mu$m.

(2) Example 2

1 g of carbon nanotubes having a mean aspect ratio (L/D) of 500 were added to 100 g of a polyester resin, and then the mixture was uniformly dispersed at a speed of 3000 rpm in a high-speed agitator, thereby preparing a coating solution. The thus-prepared coating solution was used to form a film having a thickness of 100 um.

(3) Comparative Example 1

A polyester resin was used to form a film having a thickness of 100 um.

(4) Comparative Example 2

10 g of carbon black having a mean aspect ratio (L/D) of 1 was added to 100 g of a polyester resin, and then the mixture was uniformly dispersed at a speed of 3000 rpm in a high-speed agitator, thereby preparing a coating solution. The thus-prepared coating solution was used to form a film having a thickness of 100 um.

2. Evaluation of vibration damping performance

On the films manufactured in the examples and the comparative examples, a dynamic mechanical analyzer (DMA) was used to measure a damping energy (loss modulus) for every 0.1% strain with a frequency of 10 hz at room temperature.

[Table 1]

| | | Damping energy (MPa) | | | |
|---|---|---|---|---|---|
| | | Example 1 | Example 2 | Comparative Example 1 | Comparative Example 2 |
| | | Nanoclay (mean aspect ratio = 100) | Carbon nanotubes (mean aspect ratio = 500) | - | Carbon black (mean aspect ratio = 1) |
| Strain (%) | 0.1 | 16 | 20 | 13 | 13 |
| | 0.2 | 20 | 25 | 14 | 13.5 |
| | 0.3 | 23 | 28 | 13 | 14.5 |
| | 0.4 | 28 | 33 | 14 | 14 |
| | 0.6 | 31 | 38 | 14 | 14 |
| | 0.8 | 33 | 39 | 14 | 15 |
| | 1.0 | 38 | 42 | 14 | 15 |
| | 1.2 | 39 | 46 | 13 | 15 |
| | 1.5 | 41 | 51 | 14 | 15 |

It is recognized that the films manufactured using the inorganic nanoparticles having a mean aspect ratio of 100 or more as in Examples 1 and 2 had a high damping energy value depending on a strain, and had a rapidly increased damping energy value with a higher strain. This means that though external force was applied to the film, vibrational energy was converted into thermal energy due to the viscoelastic properties of the polymer resin and a slip occurring in a polymer resin interface. That is, it is recognized from the results of measuring the damping energy that the coating solution composition including a polymer resin and inorganic nanoparticles having a mean aspect ratio of 100 or more according to the present invention may be applied to the manufacturing of a vibration damping steel sheet having excellent vibration damping performance.

**Claims**

1. A surface treatment composition for a vibration damping steel sheet comprising: a polymer resin and inorganic nanoparticles having a mean aspect ratio (LID) of 100 or more,

   wherein the polymer resin is one or more selected from the group consisting of an ethylene vinyl acetate resin, a polyethylene resin, a polypropylene resin, a polyvinyl butyral resin, a polyester resin, a polyvinyl chloride resin, and an epoxy resin, and
   wherein the inorganic nanoparticles are one or more selected from the group consisting of a graphite nanofiber and carbon nanotubes.

**2.** The surface treatment composition for a vibration damping steel sheet of claim 1, wherein the inorganic nanoparticles are included at 0.1 to 20 parts by weight based on 100 parts by weight of the polymer resin.

**3.** A vibrational damping steel sheet comprising: a steel sheet, and a vibration damping layer containing the composition of claim 1 or 2 on at least one surface of the steel sheet.


**Patentansprüche**

**1.** Oberflächenbehandlungszusammensetzung für ein

schwingungsdämpfendes Stahlblech, umfassend: ein Polymerharz und anorganische Nanopartikel mit einem mittleren Seitenverhältnis (L/D) von 100 oder mehr,
wobei das Polymerharz eines oder mehrere aus der Gruppe bestehend aus einem Ethylenvinylacetatharz, einem Polyethylenharz, einem Polypropylenharz, einem Polyvinylbutyralharz, einem Polyesterharz, einem Polyvinylchloridharz und einem Epoxyharz ist, und
wobei die anorganischen Nanopartikel eines oder mehrere aus der Gruppe bestehend aus einer Graphitnanofaser und Kohlenstoffnanoröhren sind.

**2.** Oberflächenbehandlungszusammensetzung für ein schwingungsdämpfendes Stahlblech nach Anspruch 1, wobei die anorganischen Nanopartikel zu 0,1 bis 20 Gewichtsteilen, bezogen auf 100 Gewichtsteile des Polymerharzes, enthalten sind.

**3.** Schwingungsdämpfendes Stahlblech, umfassend: ein Stahlblech und eine schwingungsdämpfende Schicht, die die Zusammensetzung nach Anspruch 1 oder 2 auf mindestens einer Oberfläche des Stahlblechs enthält.


**Revendications**

**1.** Composition de traitement de surface pour une tôle d'acier amortissant les vibrations, comprenant : une résine polymère et des nanoparticules inorganiques ayant un rapport d'aspect moyen (L/D) de 100 ou plus,

dans laquelle la résine polymère est une ou plusieurs résines choisies dans le groupe constitué par une résine d'éthylène-acétate de vinyle, une résine de polyéthylène, une résine de polypropylène, une résine de polyvinylbutyral, une résine de polyester, une résine de polychlorure de vinyle et une résine époxy, et
dans laquelle les nanoparticules inorganiques sont une ou plusieurs parmi le groupe constitué d'une nanofibre de graphite et de nanotubes de carbone.

**2.** Composition de traitement de surface pour une tôle d'acier amortissant les vibrations selon la revendication 1, dans laquelle les nanoparticules inorganiques sont contenues à raison de 0,1 à 20 parties en poids par rapport à 100 parties en poids de la résine polymère.

**3.** Tôle d'acier amortissant les vibrations, comprenant : une tôle d'acier, et une couche amortissant les vibrations contenant la composition selon la revendication 1 ou 2 sur au moins une surface de la tôle d'acier.

[FIG. 1]

(a)

POLYMER RESIN

SHEAR
DISPLACEMENT

STEEL SHEET

(b)

ELONGATION

POLYMER RESIN

STEEL SHEET

[FIG. 2]

EXTERNAL
FORCE·

POLYMER RESIN

OCCURRENCE OF
VIBRATION OR CRACK

[FIG. 3]

[FIG. 4]

[FIG. 5]

(a)

VIBRATION

(b)

VIBRATION    VIBRATION DAMPING

(c)

VIBRATION    VIBRATION DAMPING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5193770 A
- JP SHO56159160 A
- JP SHO59152847 A
- JP 2009213976 A
- CN 103031030 A
- WO 2014153570 A2
- JP 2019504189 A
- KR 20100050252 A